(19) Europäisches Patentamt / European Patent Office / Office européen des brevets

(11) **EP 4 256 376 B1**

(12) **FASCICULE DE BREVET EUROPÉEN**

(45) Date de publication et mention
de la délivrance du brevet:
**09.04.2025 Bulletin 2025/15**

(21) Numéro de dépôt: **21815473.0**

(22) Date de dépôt: **17.11.2021**

(51) Classification Internationale des Brevets (IPC):
**G01S 13/931** (2020.01)     **G01S 7/02** (2006.01)
**H01Q 15/02** (2006.01)     **H01Q 15/08** (2006.01)

(52) Classification Coopérative des Brevets (CPC):
**G01S 7/027; H01Q 1/3233; H01Q 1/3291;
H01Q 19/06;** G01S 2013/93277

(86) Numéro de dépôt international:
**PCT/EP2021/082051**

(87) Numéro de publication internationale:
**WO 2022/117351 (09.06.2022 Gazette 2022/23)**

(54) **ENSEMBLE DE VÉHICULE COMPRENANT UN CAPTEUR RADAR ET UN MODULE LUMINEUX DE SIGNALISATION**

FAHRZEUGANORDNUNG MIT EINEM RADARSENSOR UND EINEM LICHTEMITTIERENDEN SIGNALMODUL

VEHICLE ASSEMBLY COMPRISING A RADAR SENSOR AND A LIGHT-EMITTING SIGNALLING MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.12.2020 FR 2012495**

(43) Date de publication de la demande:
**11.10.2023 Bulletin 2023/41**

(73) Titulaire: **VALEO VISION**
**93012 Bobigny Cedex (FR)**

(72) Inventeurs:
• **ALBOU, Pierre**
  **93012 BOBIGNY (FR)**
• **RENAUD, Pierre**
  **93012 Bobigny - Cedex (FR)**

(74) Mandataire: **Valeo Visibility**
**Service Propriété Industrielle**
**c/o Valeo Vision**
**34, rue Saint André**
**93012 Bobigny (FR)**

(56) Documents cités:
EP-A1- 3 644 087     DE-A1- 102011 115 829
US-A1- 2018 351 274

**Description**

La présente invention se rapporte à un ensemble de véhicule pour véhicule. Elle trouve une application particulière mais non limitative dans les véhicules automobiles.

De plus en plus de capteurs radars sont utilisées pour détecter un objet dans l'environnement extérieur d'un véhicule automobile et estimer sa position angulaire, et exécuter en conséquence des fonctions de freinage automatique d'urgence, de régulation de vitesse ou encore de détection d'angles morts. Classiquement ces capteurs radars sont montés derrière le pare-choc du véhicule automobile.

Un inconvénient de cet état de la technique est qu'une intégration derrière le pare-choc réduit les performances des capteurs radars en raison de la couche de peinture métallisée appliquée sur le pare-choc et en raison de la forme incurvée dudit pare-choc. Cela entraîne une mauvaise estimation de la position angulaire d'un objet.

Le document DE102011115829A1 divulgue un radar et un module lumineux réalisant une fonction de signalisation suivant l'art antérieur.

Dans ce contexte, la présente invention vise à proposer un ensemble de véhicule qui permet de résoudre l'inconvénient mentionné.

A cet effet, l'invention propose un ensemble de véhicule pour véhicule, ledit ensemble de véhicule comprenant :

- un capteur radar configuré pour émettre des ondes radars sur une plage de longueurs d'onde, et
- un module lumineux configuré pour réaliser une fonction de signalisation, ledit module lumineux comprend une sous-couche et une couche de motifs ladite couche de motifs formant un élément diélectrique structuré sub-longueur d'ondes avec une période de répétition des motifs qui est inférieure au quart d'une longueur d'onde de ladite plage, et caractérisé en ce que l'épaisseur totale dudit module lumineux est égale à m fois une longueur d'onde de ladite plage le tout divisé par deux fois l'indice de réfraction équivalent de ladite sous-couche et de ladite couche de motifs fois le cosinus d'un angle réfracté correspondant à un angle d'incidence des ondes radars, avec m entier.

Selon des modes de réalisation non limitatifs, l'ensemble de véhicule peut comporter en outre une ou plusieurs caractéristiques supplémentaires prises seules ou selon toutes les combinaisons techniquement possibles, parmi les suivantes.

Selon un mode de réalisation non limitatif, ledit capteur radar est un capteur radar à ondes millimétriques ou hyperfréquences ou micro-ondes.

Selon un mode de réalisation non limitatif, lesdites ondes radars sont émises sur une bande de fréquence comprise entre 100MHz et 5GHz.

Selon un mode de réalisation non limitatif, ladite période de répétition des motifs est inférieure au dixième de ladite longueur d'onde des ondes radars.

Selon un mode de réalisation non limitatif, lesdits motifs sont des prismes cylindriques, ou rectangulaires, ou pyramidaux, ou cubiques, ou des portions de tores.

Selon un mode de réalisation non limitatif, un motif comprend des dimensions inférieures à 0.4mm.

Selon un mode de réalisation non limitatif, ladite épaisseur totale est formée par la hauteur desdits motifs et par l'épaisseur de ladite sous-couche.

Selon un mode de réalisation non limitatif, si l'angle d'incidence est égal à zéro alors l'épaisseur totale est égale à ladite longueur d'onde divisée par deux fois l'indice de réfraction équivalent.

Selon un mode de réalisation non limitatif, l'épaisseur totale est définie avec un angle d'incidence égal à arctan(d1/(2e4)), avec e4 la distance entre ledit capteur radar et ledit module lumineux et d1 la distance entre une antenne émettrice et des antennes réceptrices dudit capteur radar.

Selon un mode de réalisation non limitatif, ledit module lumineux comprend en outre une couche réfléchissante et l'épaisseur totale dudit module lumineux est égale à m fois une longueur d'onde de ladite plage le tout divisé par deux fois l'indice de réfraction équivalent de ladite sous-couche, de ladite couche de motifs et de ladite couche réfléchissante fois le cosinus d'un angle réfracté correspondant à un angle d'incidence des ondes radars, avec m entier.

Selon un mode de réalisation non limitatif, l'indice de réfraction équivalent est calculé pour un angle d'incidence des ondes radars égal au centre d'un champ de vision dudit capteur radar.

Selon un mode de réalisation non limitatif, ledit module lumineux est un module lumineux d'éclairage de jour, ou un clignotant, ou un catadioptre, ou un feu de stop surélevé.

Il est en outre proposé un module lumineux disposé en regard d'un capteur radar configuré pour émettre des ondes radars sur une plage de longueurs d'onde, ledit module lumineux étant configuré pour réaliser une fonction de signalisation et comprenant une sous-couche et une couche de motifs, ladite couche de motifs forme un élément diélectrique structuré sub-longueur d'ondes avec une période de répétition des motifs qui est inférieure au quart d'une longueur d'onde de ladite plage, et caractérisé en ce que l'épaisseur totale dudit module lumineux est égale à m fois ladite longueur d'onde le tout divisé par deux fois l'indice de réfraction équivalent de ladite sous-couche et de ladite couche de

**EP 4 256 376 B1**

motifs fois le cosinus d'un angle réfracté correspondant à un angle d'incidence des ondes radars, avec m entier.

L'invention et ses différentes applications seront mieux comprises à la lecture de la description qui suit et à l'examen des figures qui l'accompagnent :

[Fig. 1] est une vue schématique d'un ensemble de véhicule, ledit ensemble de véhicule comprenant un capteur radar et un module lumineux, selon un mode de réalisation non limitatif de l'invention,

[Fig. 2] est une vue schématique d'une onde radar émise par le capteur radar de la figure 1 qui se réfléchit partiellement sur ledit module lumineux de la figure 1, selon un mode de réalisation non limitatif,

[Fig. 3] est une vue schématique du module lumineux de la figure 1, ledit module lumineux comprenant une sous-couche et une couche de motifs, selon un mode de réalisation non limitatif,

[Fig. 4] est une vue en perspective d'une zone locale des motifs de la couche de motifs du module lumineux de la figure 3, selon un mode de réalisation non limitatif,

[Fig. 5] est une vue schématique d'une onde radar émise par le capteur radar de la figure 1 qui se réfléchit sur ledit module lumineux de la figure 1, ledit module lumineux comprenant une couche supplémentaire qui est une couche réfléchissante, selon un mode de réalisation non limitatif.

Les éléments identiques, par structure ou par fonction, apparaissant sur différentes figures conservent, sauf précision contraire, les mêmes références.

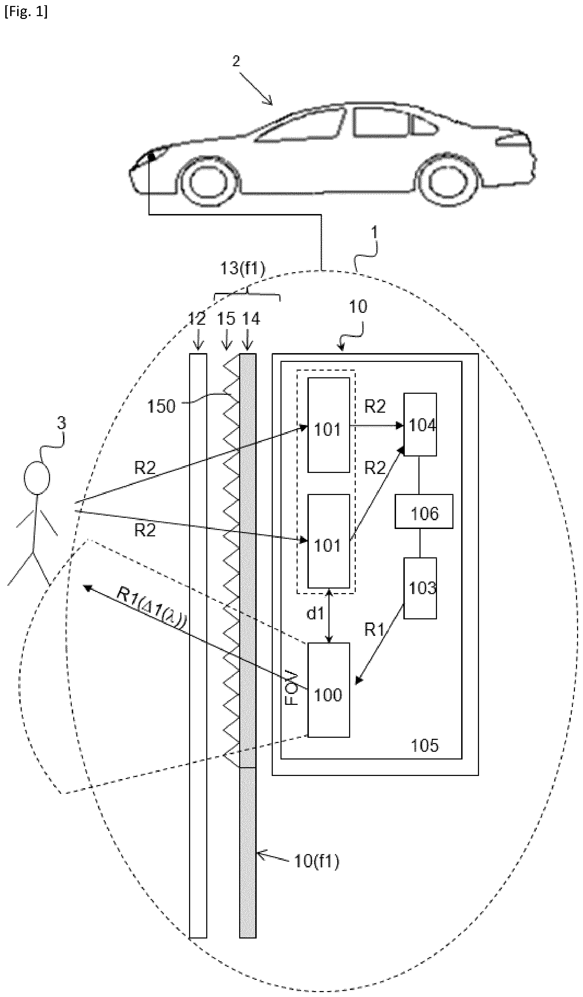

L'ensemble de véhicule 1 d'un véhicule 2 selon l'invention est décrit en référence aux figures 1 à 5. L'ensemble de véhicule 1 est autrement appelé système de véhicule 1. Dans un mode de réalisation non limitatif, le véhicule 2 est un véhicule automobile. Par véhicule automobile, on entend tout type de véhicule motorisé. Ce mode de réalisation est pris comme exemple non limitatif dans la suite de la description. Dans la suite de la description, le véhicule 2 est ainsi autrement appelé véhicule automobile 2. Dans un mode de réalisation non limitatif, l'ensemble de véhicule 1 est disposé dans un dispositif d'éclairage ou un dispositif de signalisation du véhicule automobile 2, avant ou arrière.

Tel qu'illustré sur la figure 1, le dispositif lumineux de véhicule 2 comprend :

- un capteur radar 10 ayant un champ de vision FOV et configuré pour émettre des ondes radars R1 dans ledit champ de vision FOV, sur une plage Δ1 de longueurs d'onde λ,
- un module lumineux 13 configuré pour réaliser une fonction de signalisation f1, autrement appelée fonction f1. Il est ainsi autrement appelé module lumineux de signalisation 13.

L'ensemble de véhicule 1 comprend en outre une glace de sortie 12. La glace de sortie 12 fait partie ou non du module lumineux 13.

Le capteur radar 10 est décrit ci-après. Tel qu'illustré sur la figure 1, le capteur radar 10 est disposé en regard du module lumineux 13. Dans un mode de réalisation non limitatif, le capteur radar 10 est un capteur radar à ondes millimétriques (entre 24GHz et 300 GHz) ou hyperfréquences (entre 300MHz et 81GHz) ou micro-ondes (entre 1GHz et 300GHz). Dans une variante de réalisation non limitative, le capteur radar 10 fonctionne à une fréquence radar comprise entre 76GHz et 81GHz. Dans un mode de réalisation non limitatif, les ondes radars R1 sont émises sur une bande de fréquence comprise entre 100MHz et 5GHz. Ainsi, dans un exemple non limitatif, si le capteur fonctionne à une fréquence radar de 77GHz, soit une longueur d'onde λ de 3.95mm, avec une bande de fréquence de 1GHz, le capteur radar 10 fonctionnera sur une bande de fréquence de 76.5GHZ à 77.5GHz. Les ondes radars R1 seront ainsi émises sur la plage de fréquence 76.5GHZ à 77.5GHz, soit une plage Δ1 de longueurs d'onde λ de 3.87mm à 3.92mm. Ainsi, dans autre un exemple non limitatif, si le capteur radar 10 fonctionne à une fréquence radar de 78.5GHz avec une bande de fréquence de 5GHz, le capteur radar 10 fonctionnera sur une bande de fréquence de 76GHZ à 81GHz. Les ondes radars R1 seront ainsi émises sur la plage de fréquence 76GHZ à 81GHz, soit une plage Δ1 de longueurs d'onde λ de 3.701mm à 3.945mm.

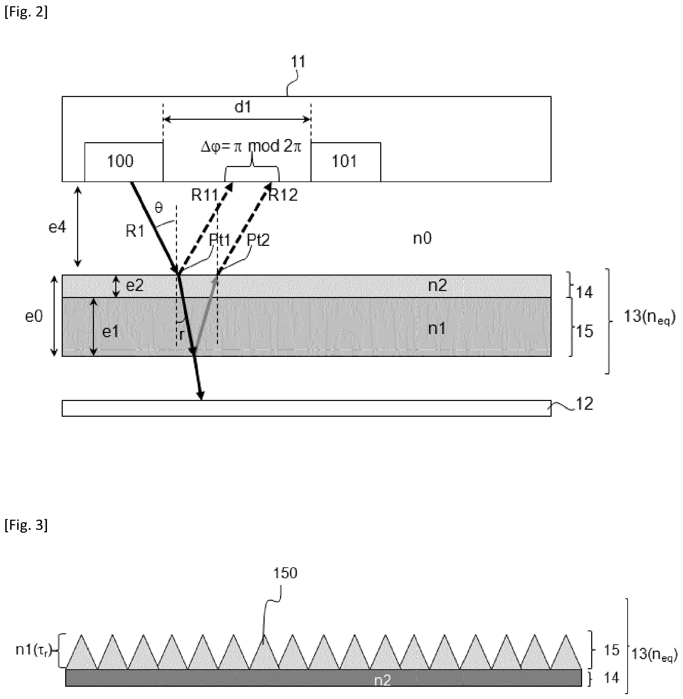

Tel qu'illustré sur la figure 2, les ondes radars R1 émises arrivent avec un angle d'incidence θ sur le module lumineux 13. Dans un mode de réalisation non limitatif, l'angle d'incidence θ est compris entre 0° et +-30°. Le champ de vision FOV varie ainsi entre -30° et +30°. Le centre du champ de vision FOV est un angle de 0° par rapport à l'axe longitudinal du véhicule, autrement appelé axe du véhicule. Dans un autre mode de réalisation non limitatif, le champ de vision FOV varie ainsi entre -90° et +45°. Le centre du champ de vision FOV est un angle de -45° par rapport à l'axe du véhicule et l'angle d'incidence θ des ondes radars R1 sur le module lumineux 13 restent proches de 0° (l'ensemble de véhicule 1 étant positionné alors à environ 45° de l'axe du véhicule).

Le capteur radar 10 est configuré pour scanner l'environnement extérieur du véhicule automobile 2, grâce à l'émission d'ondes radars R1. Tel qu'illustré sur la figure 1, le capteur radar 10 comprend ainsi :

- au moins une antenne émettrice 100 configurée pour émettre des ondes radars R1, autrement appelées ondes radars primaires R1,
- au moins deux antennes réceptrices 101 configurées pour recevoir des ondes radars R2, autrement appelées ondes radars secondaires R2, ou ondes radars de retour R2.

Le capteur radar 10 comprend en outre au moins un émetteur 103 configuré pour générer les ondes radars primaires R1 et au moins un récepteur 104 configuré pour traiter des ondes radars secondaires R2 reçues en retour. Dans un mode de réalisation non limitatif, un seul composant électronique peut être utilisé pour les deux fonctions émission et réception. On aura ainsi un ou plusieurs émetteur/récepteur appelés « transceiver » dans le langage anglo-saxon. Ledit émetteur 103 génère des ondes radars primaires R1 qui sont par la suite émises par l'antenne émettrice 100, qui lorsqu'elles rencontrent un objet 3 (ici un piéton dans l'exemple non limitatif illustré) dans l'environnement extérieur du véhicule automobile 2 se réfléchissent sur ledit objet 3. Les ondes radars ainsi réfléchies sont des ondes transmises en retour au capteur radar 10. Ce sont les ondes radars secondaires R2 reçues par les antennes réceptrices 101. Ce sont des ondes radars retransmises en direction du capteur radar 10. Dans un mode de réalisation non limitatif, les ondes radars primaires R1 et les ondes radars secondaires R2 sont des ondes radio fréquence. Dans un mode de réalisation non limitatif, le capteur radar 10 comprend une pluralité d'émetteurs 103 et une pluralité de récepteurs 104.

L'antenne émettrice 100, autrement appelée antenne 100, est configurée pour émettre les ondes radars primaires R1 générées par l'émetteur 103. Les antennes réceptrices 101, autrement appelées antennes 101, sont configurées pour recevoir les ondes radars secondaires R2 et les communiquer au récepteur 104 qui les traite par la suite. Il existe un déphasage entre les ondes radars secondaires R2 reçues par les antennes réceptrices 101 qui permet d'en déduire la position angulaire de l'objet 3 par rapport au véhicule automobile 2, objet 3 qui se trouve dans l'environnement extérieur du véhicule automobile 2. Dans des modes de réalisation non limitatifs, les antennes 100, 101 sont des antennes pastilles autrement appelée dans le langage anglo-saxon « patch antenna » ou des antennes à fente autrement appelée dans le langage anglo-saxon « slot antenna ».

Dans un mode de réalisation non limitatif, les antennes 100, 101, l'émetteur 103 et le récepteur 104 sont disposés sur une carte à circuit imprimé 105. Dans un mode de réalisation non limitatif, la carte à circuit imprimé est une carte à circuit imprimé rigide autrement appelée PCBA (« Printed Circuit Board Assembly » dans le langage anglo-saxon ou une carte à circuit imprimé flexible, autrement appelé « Flexboard » dans le langage anglo-saxon.

Le capteur radar 10 comprend en outre une unité de contrôle électronique 106 configurée pour contrôler l'émetteur 103 et le récepteur 104. Un capteur radar étant connu de l'homme du métier, il n'est pas décrit plus en détail ici.

Le module lumineux 13 est décrit ci-après. Le module lumineux 13 est configuré pour réaliser une fonction de signalisation f1. Dans des modes de réalisation non limitatifs, ledit module lumineux 13 est un module lumineux d'éclairage de jour, ou un clignotant, ou un catadioptre, ou un feu de stop surélevé.

Le module lumineux 13 possède un indice de réfraction équivalent $n_{eq}$ à l'échelle des longueurs d'onde $\lambda$ de la plage $\Delta 1$ de longueurs d'onde. On notera que n1 peut être variable en raison du design optique de la fonction de signalisation f1 (donc de la couche 15 décrite ci-après, autrement appelée couche optique 15) ce qui entraîne que l'indice de réfraction équivalent $n_{eq}$ est variable. Cela doit être pris en compte dans le calcul de l'épaisseur e0 décrite par la suite.

Tel qu'illustré sur les figures 2 et 3, le module lumineux 13 comprend une sous-couche 14 et une couche 15 de motifs 150. La sous-couche 14 est configurée pour supporter la couche 15 de motifs 150. Elle est disposée directement en regard du capteur radar 10. Elle possède un indice de réfraction n2. Dans des modes de réalisation non limitatifs, la sous-couche 14 est formée d'un matériau en plastique, en verre ou en céramique. Dans un exemple non limitatif, le plastique est du polycarbonate. La couche 15 de motifs 150 forme un élément diélectrique structuré sub-longueur d'ondes. Elle possède un indice de réfraction n1 dépendant des motifs 150 et de leur espacement, autrement appelé indice de réfaction local n1. Les motifs 150 sont définis lors du design optique pour réaliser la fonction de signalisation f1. Dans des modes de réalisation non limitatifs, les motifs 150 servent au découplage de la lumière dans un guide de lumière visible, ou servent à la mise en forme du faisceau de lumière émis par le module lumineux 13. Les motifs 150 sont définis de sorte à respecter la règlementation du faisceau de lumière du module lumineux 13 et son aspect visible au niveau esthétique lorsque la fonction f1 est allumée. Le design optique est ainsi imposé sans prendre en compte la présence ou l'absence du capteur radar 10 notamment pour ne pas créer plusieurs versions de la couche optique 15.

Dans des modes de réalisation non limitatifs, l'élément diélectrique est formé d'un matériau en plastique, en verre ou en céramique. Dans un exemple non limitatif, le plastique est du polycarbonate. On rappelle qu'un matériau diélectrique est non conducteur et laisse donc passer les ondes radars R1 contrairement à un matériau conducteur. Lorsque les ondes radars R1 sont émises par le capteur radar 10, elles rencontrent ainsi d'abord la sous-couche 14, puis la couche 15 de motifs 150 et enfin la glace de sortie 12.

Par structuré, on entend que la couche 15 comprend les motifs 150, autrement appelés structures. Par sub-longueur d'ondes, on entend que le matériau diélectrique structuré est à une échelle plus petite que les longueurs d'onde $\lambda$ de ladite plage $\Delta 1$. Le fait que les motifs 150 de la couche 15 soient sub-longueur d'ondes permet la modélisation de cette couche 15 comme une couche à indice variable. Dans le cas contraire, la couche 15 devrait être considérée comme un élément optique diffractif.

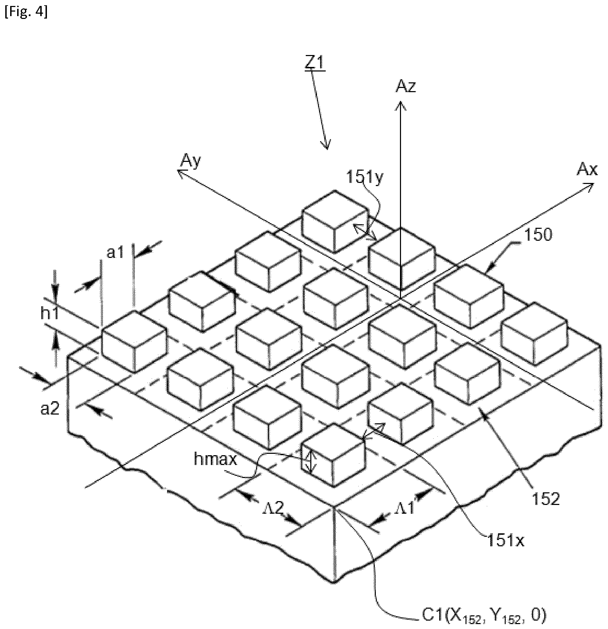

Tel qu'illustré sur la figure 4 qui est une vue d'une zone locale Z1 des motifs 150 de la couche 15, les motifs 150 présentent des dimensions a1 (largeur), a2 (largeur), h1 (hauteur). Dans des modes de réalisation non limitatifs, les motifs 150 sont des prismes cylindriques (autrement appelé piliers cylindres), ou rectangulaires (autrement appelé piliers rectangles), ou pyramidaux (autrement appelé piliers pyramides), ou cubiques (autrement appelé piliers carrés), ce dernier cas étant illustré sur la figure 4, ou encore des portions de tores. Ils peuvent également avoir toute autre forme parallélépipédique. Dans un mode de réalisation non limitatif, un motif 150 comprend des dimensions a1, a2 inférieures à 0.4mm. Cette valeur est très petite devant les longueurs d'onde $\lambda$ de ladite plage $\Delta1$. Par exemple la longueur d'onde $\lambda$ est de 4mm pour une fréquence de 77GHz ; dans ce cas, la valeur de a1, a2 est environ égale à $\lambda/10$.

Tel qu'illustré sur les figures 3 et 4, la couche 15 de motifs 150 est composée de cellules unitaires 152 comprenant chacune un motif 150 et une portion d'air entourant ledit motif 150. Dans une variante de réalisation non limitative illustrée sur la figure 3, les motifs 150 sont contigus (jointifs) sur la surface limite entre la couche 15 et la sous-couche 14. Cette variante non limitative est applicable pour des motifs 150 en forme de pyramide ou de portion de tores. Une cellule unitaire 152 est définie par la période de répétition A des structures 150, autrement appelé période de répétition A des motifs 150 ou encore période du réseau A, avec A=A1xA2. A1 est la période du réseau selon une première direction Ax (illustrée sur la figure 4), et A2 est la période du réseau selon une deuxième direction Ay (illustrée sur la figure 4). Ax et Ay sont des directions arbitraires non parallèles entre elles. Dans un mode de réalisation non limitatif, la deuxième direction Ay est perpendiculaire à la première direction Ax. Dans un autre exemple non limitatif, la cellule unitaire 152 un carré, un hexagone, un parallélogramme ou toute autre forme qui permet de paver périodiquement la surface limite entre la couche 15 et la sous-couche 14. On notera Az, une troisième direction perpendiculaire à la première direction Ax et à la deuxième direction Ay, le tout formant un repère Ax, Ay, Az.

Dans un premier mode de réalisation non limitatif, l'élément diélectrique structuré sub-longueur d'ondes qu'est la couche 15 possède un indice de réfraction n1 constant. C'est un élément diélectrique périodique structuré sub-longueur d'ondes. Les dimensions a1, a2 des motifs 150 restent constants et A1 et A2 sont constants également. Autrement dit, les motifs 150 sont espacés de façon identique entre eux selon la première direction Ax et sont espacés de façon identique selon la deuxième direction Ay. Autrement dit, la couche 15 comprend des espacements 151x identiques selon la première direction Ax, et des espacements 151y identiques selon la deuxième direction Ay (illustrés sur la figure 4) entre les motifs 150, à savoir il y a la même proportion d'air entre les motifs 150.

Dans un deuxième mode de réalisation non limitatif, l'élément diélectrique structuré sub-longueur d'ondes qu'est la couche 15 possède un indice de réfraction n1 variable. Dans une première variante de réalisation non limitative, c'est un élément diélectrique structuré sub-longueur d'ondes à cellule périodique. Les dimensions a1, a2 des motifs 150 changent le long de la couche 15 faisant varier l'indice de réfraction n1 de la couche 15, tandis que A1 et A2 sont constants. Dans une deuxième variante de réalisation non limitative, c'est un élément diélectrique structuré sub-longueur d'ondes à cellule non périodique. A1 et A2 changent le long de la couche 15 pour faire varier l'indice de réfraction n1 de la couche 15, tandis que les dimensions a1, a2 des motifs 150 peuvent rester constantes. La couche 15 comprend des espacements 151x, 151y variables entre les motifs 150, à savoir il y a des proportions d'air différentes entre les motifs 150. Ainsi, dans cette deuxième variante de réalisation non limitative, on peut faire varier A1 et A2 et également les dimensions a1, a2 des motifs 150 pour faire varier l'indice de réfraction de la couche 15. Dans un exemple non limitatif, pour des motifs 150 en portions de tores, les rayons de courbure sont variables entre les motifs 150. Dans un autre exemple non limitatif, pour des motifs 150 en forme de pyramide tronquée, c'est la hauteur de troncature qui varie.

Par sub-longueur d'onde, on entend que la période du réseau A1, A2 est inférieure au quart d'une de ladite plage $\Delta1$ de longueurs d'onde $\lambda$. Dans un exemple non limitatif, la longueur d'onde $\lambda$ considérée est la plus petite des longueurs d'onde dans ladite plage $\Delta1$. Ainsi, $A1<\lambda/4$ et $A2<\lambda/4$. Dans un mode de réalisation non limitatif, la période du réseau A1, A2 est inférieure au dixième de ladite longueur d'onde $\lambda$. Ainsi, $A1< \lambda/10$ et $A2<\lambda/10$. On notera que cette longueur d'onde $\lambda$ est choisie dans ladite plage $\Delta1$ et sera celle utilisée pour les formules ci-dessous.

Tel qu'illustré sur la figure 2, lorsqu'une onde radar R1 est émise par le capteur radar 10, elle chemine jusqu'au module lumineux 13 qui comprend une épaisseur e0. L'onde radar R1 arrive sur le module lumineux 13 avec un angle d'incidence $\theta$ auquel correspond un angle réfracté r. L'onde radar R1 se réfléchit sur le module lumineux 13 et génère deux ondes réfléchies, dont l'une R11 a été réfléchie sur la face extérieure de la sous-couche 14 du module lumineux 13 et l'autre à l'intérieur du module lumineux 13. Les deux ondes réfléchies R11 et R12 sont des ondes réfléchies dites d'ordre 1 qui reviennent sur le capteur radar 10. Ce sont des réflexions parasites. Lorsque l'angle d'incidence $\theta$ est différent de 0°, l'angle réfracté correspondant r est différent de 0° également. La différence de phase $\Delta\varphi$, autrement appelé déphasage $\Delta\varphi$, entre ces deux ondes réfléchies R11 et R12 est égal à :

[Math1]

$$\Delta\varphi = \frac{n_{eq}\delta}{\lambda} + \pi - \frac{2e0\tan(r)\sin(\theta)}{\lambda}$$

Avec :

- $n_{eq}$, l'indice de réfraction équivalent pour la sous-couche 14 et la couche 15,
- $\delta$ le trajet de l'onde réfléchie R12 dans la matière égal à 2e0 /cos(r),
- $n\delta/\lambda$ le déphasage dû au parcours dans la matière,
- $\pi$ le déphasage dû à la réflexion interne dans la sous-couche 14 et la couche 15 de motifs 150,

  - - $((2e0 \tan(r) \sin(\theta))/\lambda)$ le déphasage dans l'air dû à l'écart entre le point de réflexion Pt1 de l'onde réfléchie R11 et le point d'émergence Pt2 de l'onde réfléchie R12.

Comme $\sin(\theta) = n_{eq} . \sin(r)$, on obtient :

[Math2]

$$\frac{-2e0\tan(r)\sin(\theta)}{\lambda} = \frac{-2e0 n_{eq}\sin(r)^2}{\lambda\cos(r)}$$

Soit :

[Math3]

$$\Delta\varphi = \pi + \frac{2n_{eq}e0}{\lambda\cos(r)}(1 - \sin(r)^2) = \pi + \frac{2n_{eq}e0\cos(r)}{\lambda}$$

et ce quelque soit la valeur de l'angle réfracté r.

Comme les ondes réfléchies R11 et R12 reviennent en direction du capteur radar 10, elles entraînent des perturbations sur le capteur radar 10, à savoir une atténuation du rapport signal sur bruit. Afin de supprimer ces perturbations, on va définir l'épaisseur totale e0 du module lumineux 13 de sorte que les ondes réfléchies R11 et R12 soient en opposition de phase pour créer des interférences destructrices. Pour obtenir des interférences destructrices, la différence de phase $\Delta\varphi$ entre les deux ondes réfléchies R11 et R12 doit être égale à $\pi$ modulo $2\pi$. Ainsi, on a $\Delta\varphi = (2m+1)^*\pi$, avec m un entier naturel. On obtient donc :

[Math 4]

$$(2m + 1)\pi = \pi + \frac{2n_{eq}e0\cos(r)}{\lambda}$$

Soit :
Soit e0 = m $\lambda/ (2n_{eq} \cos (r))$.

On notera que l'équation e0 = m $\lambda/ (2n_{eq} \cos (r))$ est appliquée quelle que soit la valeur de l'angle r. Ainsi, cette épaisseur totale e0 est dimensionnée de sorte qu'elle soit égale à m fois ladite longueur d'onde $\lambda$ le tout divisé par deux fois un indice de réfraction équivalent $n_{eq}$ de la couche 15 de motifs 150 et de la sous-couche 14 fois le cosinus d'un angle réfracté r correspondant à l'angle d'incidence $\theta$ des ondes radars R1, avec m entier. Ainsi, à partir de l'indice de réfraction équivalent $n_{eq}$ et de la longueur d'onde $\lambda$ utilisée sur la plage de fréquence de fonctionnement du capteur radar 10, l'épaisseur totale e0 peut être déterminée de sorte que lesdites ondes réfléchies R11 et R12 s'annulent entre elles. Dans un mode de réalisation non limitatif, la longueur d'onde $\lambda$ utilisée est celle qui se situe au milieu de la plage $\Delta1$ autorisée.

Une épaisseur totale e0 idéale est définie lorsque l'angle d'incidence θ est égal à 0; et m est égal à 1. Lorsque θ = 0, r = 0. En conséquence pour m=1, l'épaisseur totale e0 idéale du module lumineux 13 est donc e0 = $\lambda$ /(2n$_{eq}$). Quand r = 0°, à savoir cos (r) = 1.

Dans un mode de réalisation non limitatif, le module lumineux 13 comprend une épaisseur totale e0 qui est comprise entre 0,8 et 1,2 fois ladite épaisseur totale e0 idéale. Cette plage de valeurs prend en compte les angles d'émission possibles du capteur radar 10. On notera que les valeurs de l'angle d'incidence θ sont comprises dans les angles possibles d'émission du capteur radar 10. Les valeurs possibles de l'angle d'incidence θ sont définies dans les spécifications techniques du capteur radar 10, ce qui signifie que les valeurs possibles de l'angle d'incidence θ sont en le champ de vision du capteur radar 10. Dans un exemple non limitatif, l'angle d'incidence θ est compris entre 0° et + -30 °. Cette valeur de plage de 0,8 à 1,2 permet de prendre en compte les tolérances de fabrication de l'épaisseur totale e0.

On notera qu'il existe une valeur de l'angle d'incidence θ pour laquelle les ondes radars réfléchies R11 et R12 entraînent une perturbation maximum des antennes réceptrices 101 du capteur radar 10. Cet angle d'incidence θ est appelé angle d'incidence θ critique. Dans un mode de réalisation non limitatif, cette valeur est égale à θ= arctan(d1/(2e4)), avec d1 la distance entre l'antenne émettrice 100 et les antennes réceptrices 101, e4 la distance entre le capteur radar 10 et le module lumineux 13 tel qu'illustré sur la figure 2. On notera que dans un exemple non limitatif l'on prend le point milieu des antennes réceptrices 101 pour calculer d1.

Ainsi, en fonction de la valeur de l'indice de réfraction local n1 et de la longueur d'onde $\lambda$ utilisée sur la plage de fréquence de fonctionnement du capteur radar 10 (entre 76GHZ à 81GHZ dans l'exemple non limitatif pris), on peut déterminer la valeur de l'épaisseur totale e0 pour que les ondes réfléchies R11 et R12 d'ordre 1 s'annulent entre elles. Les ondes radar réfléchies R11 et R12 sont réfléchies sur le module lumineux 13 dans une zone limitée.

On notera que lorsque le module lumineux 13 possède un indice de réfraction équivalent n$_{eq}$ variable, dans un mode de réalisation non limitatif, on ajuste l'épaisseur e0 localement sur la zone du module lumineux 13 où l'indice de réfraction équivalent n$_{eq}$ variable. Dans ce cas, l'épaisseur e0 est variable le long de la surface du module lumineux 13. Par contre, lorsque le module lumineux 13 possède un indice de réfraction équivalent n$_{eq}$ constant, dans ce cas, on ajuste l'épaisseur e0 pour toute la surface du module lumineux 13. En conséquence, l'épaisseur e0 est constante le long de la surface du module lumineux 13.

Le module lumineux 13 comprend une épaisseur totale e0 formée par la hauteur h1 des motifs 150 et par l'épaisseur e2 de la sous-couche 14. Pour dimensionner l'épaisseur totale e0, on ajuste l'épaisseur e2 de la sous-couche 14 de sorte que e0 = m $\lambda$/ (2n$_{eq}$ cos (r)) pour un r donné. De cette manière, on ne modifie pas les motifs 150 imposés par le design optique. Dans un mode de réalisation non limitatif, le r donné correspond à l'angle d'incidence θ critique.

Ainsi, les antennes réceptrices 101 voient moins de bruit. On arrive à un meilleur rapport signal sur bruit.

L'indice de réfraction équivalent n$_{eq}$ est égal à :

[Math 5]

$$n_{eq} = \frac{n_1 n_2 (e_1 + e_2)}{n_2 e_1 + n_1 e_2} = \frac{n_1 n_2 \left(1 + \frac{e_2}{e_1}\right)}{n_2 + n_1 \left(\frac{e_2}{e_1}\right)}$$

Avec n1 l'indice de réfraction local de la couche 15 de motifs 150, n2 l'indice de réfraction de la sous-couche 14, e1 égal à la hauteur h1 des motifs 150, et e2 l'épaisseur de la sous-couche 14. Lorsque le module lumineux 13 est à gradient d'indice, on notera que n1 est fonction de la position de la zone locale Z1 des motifs 150 sur la couche 15 où on fait le calcul. Ainsi, l'indice de réfraction équivalent n$_{eq}$ est fonction de la position de la zone locale Z1 sur la couche 15. Lorsque le module lumineux 13 n'est pas à gradient d'indice, on peut faire le calcul à n'importe quel endroit de la couche 15 de motifs 150, à savoir au niveau de n'importe quelle zone Z1.

On notera que la couche 15 de motifs 150 possède un indice de réfraction local n1 qui est calculé en fonction de la densité locale $\tau_r$ desdits motifs 150 dans la couche 15. La densité locale $\tau_r$ en un point du module lumineux 13 est la moyenne pondérée du facteur de remplissage $\tau_{r152}$ de chaque cellule 152 située à une distance du point considéré inférieure à une valeur donnée de l'ordre d'une des longueurs d'onde $\lambda$ de la plage $\Delta$1 de longueurs d'onde utilisée. L'indice de réfraction local n1, est autrement appelé indice de réfraction effectif n$_{eff}$ et est composé de deux indices de réfraction effectifs n$_{effTE}$ et n$_{effTM}$ qui dépendent de la polarisation de l'onde incidente, à savoir l'onde radar primaire R1, et qui sont exprimables en fonction de la densité locale $\tau_r$, autrement appelée facteur de remplissage $\tau_r$ qui représente la portion de matière occupée par le milieu à fort indice de réfraction n1, à savoir ici les motifs 150, par opposition au milieu à faible indice de réfraction n0, à savoir ici l'air. On notera que la densité locale $\tau_r$ représente la portion de matière occupée par le milieu à fort indice de réfraction n1 sur une zone d'une dimension de l'ordre d'une des longueurs d'onde $\lambda$ de la plage $\Delta$1 de

longueurs d'onde utilisée. On a ainsi :

[Math 6]

$$n_{effTE} = \sqrt{\varepsilon_{effTE}} = \sqrt{\tau_r \varepsilon_{max} + (1 - \tau_r)\varepsilon_{min}}$$

[Math 7]

$$n_{effTM} = \sqrt{\varepsilon_{effTM}} = \frac{1}{\sqrt{\frac{\tau_r}{\varepsilon_{max}} + \frac{1-\tau_r}{\varepsilon_{min}}}}$$

Avec le terme TE qui désigne la polarisation de l'onde incidente, à savoir ici l'onde radar R1 qui arrive sur le module lumineux 13, perpendiculaire au plan du substrat, à savoir la sous-couche 14, TM la polarisation parallèle au plan du substrat, et $\varepsilon_{max}$ la permittivité du milieu à l'indice optique le plus élevé, à savoir les motifs 150, et $\varepsilon_{min}$ pour celui ayant le plus faible indice optique, à savoir ici l'air. Dans un autre mode de réalisation non limitatif, l'air peut être remplacé par une matière plastique d'indice très bas.

On notera que lorsque l'onde incidente, ici l'onde radar R1, illumine l'élément diélectrique structuré, à savoir la couche 15, et présente une longueur d'onde $\lambda$ (de ladite plage $\Delta$1) beaucoup plus grande que la période de répétition A1, A2 des structures 150 ($\lambda \gg \Lambda$1, et $\lambda \gg \Lambda$2), il s'agit d'un régime de propagation appelé limite statique.

Pour des structures 150 à deux dimensions telles qu'illustrées sur la figure 4, l'indice de réfraction effectif $n_{eff2D}$ d'une structure 2D peut être approximé en prenant la moyenne quadratique des indices de réfraction effectifs selon les deux polarisations TM et TE en une dimension à l'ordre 0 qui correspond à la limite statique. Le facteur de remplissage $\tau_{r152}$ d'une cellule unitaire 152 est dans ce cas particulier :

[Math 7]

$$\tau_{r152} = \frac{a1.a2}{\Lambda 1.\Lambda 2}$$

Et on a :

[Math 8]

$$n_{eff2D} = \left[\frac{1}{2}\left(n_{effTE}^2 + n_{effTM}^2\right)\right]^{\frac{1}{2}}$$

Dans le cas plus général, pour une forme de motifs 150 quelconque où A1, A2 sont quelconques, avec une cellule unitaire 152 de base rectangulaire, le facteur de remplissage $\tau_{r152}$ pour une cellule unitaire 152 sera :

[Math 9]

$$\tau_{r152} = \frac{V152}{\Lambda 1.\Lambda 2.hmax}$$

Ce qui correspond à un rapport de volume de matière ($V_{152}$) dans la cellule unitaire 152 sur un volume vide englobant (A1.A2.hmax), avec hmax la hauteur maximum du motif 150 dans la cellule unitaire 152 (à savoir la plus haute hauteur dans le motif 150), et

[Math 10]

$$V_{152} = \int_0^{hmax} \int_{X152}^{X152+\Lambda 1} \int_{Y152}^{Y152+\Lambda 2} M(X, Y, Z) dX dY dZ$$

Avec $(X_{152}, Y_{152}, 0)$, les coordonnées d'un coin C1 de la cellule unitaire 152 et $M(X, Y, Z) = 1$ si le point de coordonnées $(X, Y, Z)$ se trouve dans la matière et $M(X, Y, Z) = 0$ si ce n'est pas le cas, à savoir si le point de coordonnées $(X, Y, Z)$ se trouve dans l'air. On notera que lorsqu'il se trouve dans la matière, le point se trouve dans le motif 150 de la cellule unitaire 152, et lorsqu'il se trouve dans l'air, le point peut se trouver à l'intérieur d'un motif 150 ou non (un motif 150 pouvant en effet comporter des trous d'air dans un exemple non limitatif). On notera que dans l'exemple non limitatif de la figure 4, hmax = h1 décrit précédemment.

On notera que cette formule de volume de matière $V_{152}$ est valable pour toute cellule unitaire 152 de base rectangulaire et ce quelque soit la forme du motif 150 dans ladite cellule unitaire 152. Ainsi, comme A1 et A2 peuvent changer d'une cellule unitaire 152 à une autre cellule unitaire 152 ainsi que la hauteur maximum hmax d'un motif 150 à un autre motif 150, chaque cellule unitaire 152 peut avoir un volume de matière différent et par conséquent un facteur de remplissage $\tau_{r152}$ différent. Pour avoir le facteur de remplissage $\tau_r$ de toute la couche 15 de motifs 150 en un point donné du module lumineux 13, on effectue une moyenne pondérée des facteurs de remplissage $\tau_{r152}$ de chaque cellule 152 située à une distance du point considéré sur le module lumineux 13 inférieure à une valeur donnée de l'ordre d'une des longueurs d'onde $\lambda$ de la plage $\Delta 1$ de longueurs d'onde utilisée. Cette définition est valable pour tous les points du module lumineux 13. Dans un mode de réalisation non limitatif, les points appartiennent à la surface de la sous-couche 14 de coordonnée Z=0. On a ainsi :

[Math 11]

$$\tau_r = \frac{\sum_n \Lambda 1_n . \Lambda 2_n . hmax_n . \tau_{rn}}{\sum_n \Lambda 1_n . \Lambda 2_n . hmax_n}$$

Où n désigne l'une quelconque des cellules unitaires 152 située à une distance du point considéré sur le module lumineux 13 inférieure à une valeur donnée de l'ordre d'une des longueurs d'onde $\lambda$ de la plage $\Delta 1$ de longueurs d'onde utilisée.

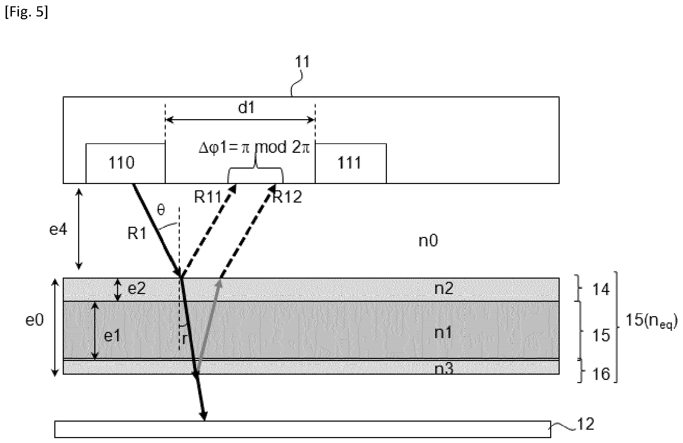

Dans un mode de réalisation non limitatif illustré sur la figure 5, le module lumineux 13 comprend en outre une couche réfléchissante 16 dans le domaine de la lumière visible et transparente ou faiblement absorbante pour le capteur radar 10 ayant un indice de réfraction n3 pour les ondes radars. Dans ce cas, l'épaisseur totale e0 dudit module lumineux 13 est égale à m fois une longueur d'onde $\lambda$ de ladite plage le tout divisé par deux fois l'indice de réfraction équivalent $n_{eq}$ de ladite sous-couche 14, de ladite couche 15 de motifs 150 et de ladite couche réfléchissante 16 fois le cosinus d'un angle réfracté r correspondant à un angle d'incidence $\theta$ des ondes radars R1, avec m entier. Ainsi, l'épaisseur totale e0 dudit module lumineux 13 est égale à ladite longueur d'onde $\lambda$ divisée par deux fois l'indice de réfraction équivalent $n_{eq}$ de ladite sous-couche 14, de ladite couche 15 de motifs 150 et de ladite couche réfléchissante 16 pour un angle d'incidence $\theta$ égal à zéro. Dans le calcul de l'indice de réfraction équivalent $n_{eq}$, on prend ainsi en compte cette couche réfléchissante 16. Les calculs précédents doivent ainsi prendre également l'indice de réfraction n3 en compte. La couche réfléchissante 16 recouvre la couche 15 de motifs 150. Dans des exemples non limitatifs, la couche réfléchissante 16 est une couche d'indium ou de peinture réfléchissante qui recouvre les motifs 150.

Bien entendu la description de l'invention n'est pas limitée aux modes de réalisation décrits ci-dessus et au domaine décrit ci-dessus. Ainsi, dans un autre mode de réalisation non limitatif, le capteur radar 10 comprend plus d'une antenne émettrice 100 et plus de deux antennes réceptrices 101. Ainsi, dans un mode de réalisation non limitatif, le module lumineux 13 peut comprendre plus de trois couches. Ainsi, le calcul de l'indice de réfraction équivalent $n_{eq}$ prendra en compte l'ensemble des couches formant le module lumineux 13. Ainsi, dans un mode de réalisation non limitatif, l'ensemble de véhicule 1 comprend en outre un module lumineux supplémentaire configuré pour réaliser une fonction d'éclairage comprenant un boîtier. Le module lumineux supplémentaire est ainsi un module lumineux d'éclairage. Dans des exemples non limitatifs, ledit module lumineux supplémentaire est un projecteur avant, un feu arrière ou un feu antibrouillard. Dans ce mode, le module lumineux de signalisation 13 et le capteur radar 10 sont intégrés dans ledit boîtier du module lumineux d'éclairage et le module lumineux de signalisation 13 est disposé à côté du module lumineux d'éclairage. On notera que le fait d'intégrer le capteur radar 10 derrière le module lumineux de signalisation 13 au lieu du module lumineux d'éclairage permet de contourner les exigences des constructeurs qui tendent à réduire l'espace derrière les modules lumineux d'éclairage. On notera que les modules lumineux d'éclairage sont en général nettement plus encombrants longitudinalement que les modules lumineux de signalisation. Il n'y a donc fréquemment pas de place suffisante pour placer le capteur radar 10 derrière ledit module lumineux d'éclairage.

Ainsi, l'invention décrite présente notamment les avantages suivants :

- en intégrant le capteur radar 10 derrière le module lumineux de signalisation 13, au lieu du pare-choc, on évite de réduire les performances du capteur radar 10,
- elle permet de supprimer les ondes réfléchies R11, R12, d'ordre 1 qui se réfléchissent en direction du capteur radar 10. Le ratio signal sur bruit dudit capteur radar 10 n'est ainsi plus réduit.

## Revendications

1. Ensemble de véhicule (1) pour véhicule (2), ledit ensemble de véhicule (1) comprenant :

   - un capteur radar (10) configuré pour émettre des ondes radars (R1) sur une plage ($\Delta$1) de longueurs d'onde ($\lambda$), et
   - un module lumineux (13) configuré pour réaliser une fonction de signalisation (f1), ledit module lumineux (13) comprend une sous-couche (14) et une couche (15) de motifs (150), ladite couche (15) de motifs (150) formant un élément diélectrique structuré sub-longueur d'ondes avec une période de répétition (A1, A2) des motifs (150) qui est inférieure au quart d'une longueur d'onde ($\lambda$) de ladite plage ($\Delta$1), et **caractérisé en ce que** l'épaisseur totale (e0) dudit module lumineux (13) est égale à m fois une longueur d'onde ($\lambda$) de ladite plage le tout divisé par deux fois l'indice de réfraction équivalent ($n_{eq}$) de ladite sous-couche (14) et de ladite couche (15) de motifs (150) fois le cosinus d'un angle réfracté (r) correspondant à un angle d'incidence ($\theta$) des ondes radars (R1), avec m entier.

2. Ensemble de véhicule (1) selon la revendication 1, selon lequel ledit capteur radar (11) est un capteur radar à ondes millimétriques ou hyperfréquences ou micro-ondes.

3. Ensemble de véhicule (1) selon la revendication précédente, selon lequel lesdites ondes radars (R1) sont émises sur une bande de fréquence comprise entre 100MHz et 5GHz.

4. Ensemble de véhicule (1) selon l'une quelconque des revendications précédentes, selon lequel ladite période de répétition (A1, A2) des motifs (150) est inférieure au dixième de ladite longueur d'onde ($\lambda$) des ondes radars (R1).

5. Ensemble de véhicule (1) selon l'une quelconque des revendications précédentes, selon lequel lesdits motifs (150) sont des prismes cylindriques, ou rectangulaires, ou pyramidaux, ou cubiques, ou des portions de tores.

6. Ensemble de véhicule (1) selon l'une quelconque des revendications précédentes, selon lequel un motif (150) comprend des dimensions (a1, a2) inférieures à 0.4mm.

7. Ensemble de véhicule (1) selon l'une quelconque des revendications précédentes, selon lequel ladite épaisseur totale (e0) est formée par la hauteur (h1) desdits motifs (150) et par l'épaisseur (e2) de ladite sous-couche (14).

8. Ensemble de véhicule (1) selon la revendication précédente, selon lequel si l'angle d'incidence ($\theta$) est égal à zéro alors l'épaisseur totale (e0) est égale à ladite longueur d'onde ($\lambda$) divisée par deux fois l'indice de réfraction équivalent ($n_{eq}$).

9. Ensemble de véhicule (1) selon l'une quelconque des revendications précédentes, selon lequel l'épaisseur totale (e0) est définie avec un angle d'incidence ($\theta$) égal à arctan(d1/(2e4)), avec e4 la distance entre ledit capteur radar (11) et ledit module lumineux (13) et d1 la distance entre une antenne émettrice (100) et des antennes réceptrices (101) dudit capteur radar (11).

10. Ensemble de véhicule (1) selon l'une quelconque des revendications précédentes, selon lequel ledit module lumineux (13) comprend en outre une couche réfléchissante (16) et l'épaisseur totale (e0) dudit module lumineux (13) est égale à m fois une longueur d'onde ($\lambda$) de ladite plage le tout divisé par deux fois l'indice de réfraction équivalent ($n_{eq}$) de ladite sous-couche (14), de ladite couche (15) de motifs (150) et de ladite couche réfléchissante (16) fois le cosinus d'un angle réfracté (r) correspondant à un angle d'incidence ($\theta$) des ondes radars (R1), avec m entier.

11. Ensemble de véhicule (1) selon l'une quelconque des revendications précédentes, selon lequel l'indice de réfraction équivalent ($n_{eq}$) est calculé pour un angle d'incidence ($\theta$) des ondes radars (R1) égal au centre d'un champ de vision (FOV) dudit capteur radar (10).

12. Ensemble de véhicule (1) selon l'une quelconque des revendications précédentes, selon lequel ledit module lumineux (13) est un module lumineux d'éclairage de jour, ou un clignotant, ou un catadioptre, ou un feu de stop surélevé.

13. Module lumineux (13) disposé en regard d'un capteur radar (10) configuré pour émettre des ondes radars (R1) sur une plage ($\Delta 1$) de longueurs d'onde ($\lambda$), ledit module lumineux (13) étant configuré pour réaliser une fonction de signalisation (f1) et comprenant une sous-couche (14) et une couche (15) de motifs (150), ladite couche (15) de motifs (150) forme un élément diélectrique structuré sub-longueur d'ondes avec une période de répétition (A) des motifs (150) qui est inférieure au quart d'une longueur d'onde ($\lambda$) de ladite plage ($\Delta 1$), et **caractérisé en ce que** l'épaisseur totale (e0) dudit module lumineux (13) est égale à m fois ladite longueur d'onde ($\lambda$) le tout divisé par deux fois l'indice de réfraction équivalent ($n_{eq}$) de ladite sous-couche (14) et de ladite couche (15) de motifs (150) fois le cosinus d'un angle réfracté (r) correspondant à un angle d'incidence ($\theta$) des ondes radars (R1), avec m entier.

**Patentansprüche**

1. Fahrzeuganordnung (1) für ein Fahrzeug (2), wobei die Fahrzeuganordnung (1) aufweist:

   - einen Radarsensor (10), der dazu ausgestaltet ist, Radarwellen (R1) über einen Bereich ($\Delta 1$) von Wellenlängen ($\lambda$) auszusenden, und
   - ein Leuchtmodul (13), das dazu ausgestaltet ist, eine Signalisierungsfunktion (f1) auszuführen,

   wobei das Leuchtmodul (13) eine Teilschicht (14) und eine Schicht (15) mit Mustern (150) aufweist, wobei die Schicht (15) mit Mustern (150) ein subwellenlängenstrukturiertes dielektrisches Element mit einer Wiederholperiode ($\Lambda 1$, A2) der Muster (150) bildet, die weniger als ein Viertel der Wellenlänge ($\lambda$) des Bereichs ($\Delta 1$) beträgt, und **dadurch gekennzeichnet ist, dass** die Gesamtdicke (e0) des Leuchtmoduls (13) gleich dem m-Fachen einer Wellenlänge ($\lambda$) des Bereichs ist, das Ganze dividiert durch das Zweifache des äquivalenten Brechungsindex ($n_{eq}$) der Teilschicht (14) und der Schicht (15) mit Mustern (150) multipliziert mit dem Cosinus eines Brechungswinkels (r), der einem Einfallswinkel ($\theta$) der Radarwellen (R1) entspricht, wobei m ganzzahlig ist.

2. Fahrzeuganordnung (1) nach Anspruch 1, wobei der Radarsensor (11) ein Radarsensor mit millimetrischen Wellen oder Hyperfrequenzen oder Mikrowellen ist.

3. Fahrzeuganordnung (1) nach dem vorhergehenden Anspruch, wobei die Radarwellen (R1) über ein Frequenzband zwischen 100 MHz und 5 GHz ausgesendet werden.

4. Fahrzeuganordnung (1) nach einem der vorhergehenden Ansprüche, wobei die Wiederholperiode ($\Lambda 1$, A2) der Muster (150) weniger als ein Zehntel der Wellenlänge ($\lambda$) der Radarwellen (R1) beträgt.

5. Fahrzeuganordnung (1) nach einem der vorhergehenden Ansprüche, wobei die Muster (150) zylindrische Prismen oder rechteckig oder pyramidal oder kubisch oder Torusabschnitte sind.

6. Fahrzeuganordnung (1) nach einem der vorhergehenden Ansprüche, wobei ein Muster (150) Abmessungen (a1, a2) von weniger als 0,4 mm aufweist.

7. Fahrzeuganordnung (1) nach einem der vorhergehenden Ansprüche, wobei die Gesamtdicke (e0) durch die Höhe (h1) der Muster (150) und durch die Dicke (e2) der Teilschicht (14) gebildet wird.

8. Fahrzeuganordnung (1) nach dem vorhergehenden Anspruch, wobei, wenn der Einfallswinkel ($\theta$) gleich null ist, die Gesamtdicke (e0) gleich der Wellenlänge ($\lambda$) dividiert durch das Zweifache des äquivalenten Brechungsindex ($n_{eq}$) ist.

9. Fahrzeuganordnung (1) nach einem der vorhergehenden Ansprüche, wobei die Gesamtdicke (e0) mit einem Einfallswinkel ($\theta$) gleich arctan(d1/(2e4)) definiert ist, wobei e4 der Abstand zwischen dem Radarsensor (11) und dem Leuchtmodul (13) ist und d1 der Abstand zwischen einer Sendeantenne (100) und Empfangsantennen (101) des Radarsensors (11) ist.

10. Fahrzeuganordnung (1) nach einem der vorhergehenden Ansprüche, wobei das Leuchtmodul (13) ferner eine reflektierende Schicht (16) aufweist und die Gesamtdicke (e0) des Leuchtmoduls (13) gleich dem m-Fachen einer Wellenlänge ($\lambda$) des Bereichs ist, das Ganze dividiert durch das Zweifache des äquivalenten Brechungsindex ($n_{eq}$) der Teilschicht (14), der Schicht (15) mit Mustern (150) und der reflektierenden Schicht (16), multipliziert mit dem Cosinus eines Brechungswinkels (r), der einem Einfallswinkel ($\theta$) der Radarwellen (R1) entspricht, wobei m ganzzahlig ist.

11. Fahrzeuganordnung (1) nach einem der vorhergehenden Ansprüche, wobei der äquivalente Brechungsindex ($n_{eq}$) für einen Einfallswinkel ($\theta$) der Radarwellen (R1) gleich dem Mittelpunkt eines Sichtfelds (FOV) des Radarsensors (10) berechnet wird.

12. Fahrzeuganordnung (1) nach einem der vorhergehenden Ansprüche, wobei das Leuchtmodul (13) ein Taglicht-Leuchtmodul oder eine Blinkleuchte oder ein Rückstrahler oder eine hochgesetzte Bremsleuchte ist.

13. Leuchtmodul (13), das gegenüber einem Radarsensor (10) angeordnet ist, der dazu ausgestaltet ist, Radarwellen (R1) über einen Bereich ($\Delta$1) von Wellenlängen ($\lambda$) auszusenden, wobei das Leuchtmodul (13) dazu ausgestaltet ist, eine Signalisierungsfunktion (f1) auszuführen und eine Teilschicht (14) und eine Schicht (15) mit Mustern (150) aufweist, wobei die Schicht (15) mit Mustern (150) ein subwellenlängenstrukturiertes dielektrisches Element mit einer Wiederholperiode ($\lambda$) der Muster (150) bildet, die weniger als ein Viertel der Wellenlänge ($\lambda$) des Bereichs ($\Delta$1) beträgt, und **dadurch gekennzeichnet ist, dass** die Gesamtdicke (e0) des Leuchtmoduls (13) gleich dem m-Fachen der Wellenlänge ($\lambda$) ist, das Ganze dividiert durch das Zweifache des äquivalenten Brechungsindex ($n_{eq}$) der Teilschicht (14) und der Schicht (15) mit Mustern (150) multipliziert mit dem Cosinus eines Brechungswinkels (r), der einem Einfallswinkel ($\theta$) der Radarwellen (R1) entspricht, wobei m ganzzahlig ist.

**Claims**

1. Vehicle assembly (1) for a vehicle (2), said vehicle assembly (1) comprising:

   - a radar sensor (10) configured to emit radar waves (R1) over a range ($\Delta$1) of wavelengths (A); and
   - a light module (13) configured to perform a signaling function (f1);

   said light module (13) comprising a sub-layer (14) and a layer (15) of patterns (150), said layer (15) of patterns (150) forming a sub-wavelength structured dielectric element with a repetition period ($\Lambda$1, $\Lambda$2) of the patterns (150) that is less than a quarter of a wavelength ($\lambda$) of said range ($\Delta$1), and **characterized in that** the total thickness (e0) of said light module (13) is equal to m times a wavelength ($\lambda$) of said range, with the whole being divided by twice the equivalent refractive index ($n_{eq}$) of said sub-layer (14) and of said layer (15) of patterns (150), times the cosine of a refracted angle (r) corresponding to an angle of incidence ($\theta$) of the radar waves (R1), where m is an integer.

2. Vehicle assembly (1) according to Claim 1, wherein said radar sensor (11) is a millimeter wave or a hyperfrequency wave or a microwave radar sensor.

3. Vehicle assembly (1) according to the preceding claim, wherein said radar waves (R1) are emitted over a frequency band ranging between 100 MHz and 5 GHz.

4. Vehicle assembly (1) according to any one of the preceding claims, wherein said repetition period ($\Lambda$1, A2) of the patterns (150) is less than one tenth of said wavelength ($\lambda$) of the radar waves (R1).

5. Vehicle assembly (1) according to any one of the preceding claims, wherein said features (150) are cylindrical prisms, or rectangular prisms, or pyramidal prisms, or cubic prisms, or segments of tori.

6. Vehicle assembly (1) according to any one of the preceding claims, wherein a pattern (150) has dimensions (a1, a2) of less than 0.4 mm.

7. Vehicle assembly (1) according to any one of the preceding claims, wherein said total thickness (e0) is formed by the height (h1) of said patterns (150) and by the thickness (e2) of said sub-layer (14).

8. Vehicle assembly (1) according to the preceding claim, wherein, if the angle of incidence ($\theta$) is equal to zero, then the total thickness (e0) is equal to said wavelength (A) divided by twice the equivalent refractive index ($n_{eq}$).

9. Vehicle assembly (1) according to any one of the preceding claims, wherein the total thickness (e0) is defined with an angle of incidence ($\theta$) equal to arctan(d1/(2e4)), with e4 being the distance between said radar sensor (11) and said light module (13) and d1 being the distance between an emitter antenna (100) and receiver antennas (101) of said radar sensor (11).

10. Vehicle assembly (1) according to any one of the preceding claims, wherein said light module (13) further comprises a reflective layer (16) and the total thickness (e0) of said light module (13) is equal to m times a wavelength ($\lambda$) of said range, with the whole being divided by twice the equivalent refractive index ($n_{eq}$) of said sub-layer (14), of said layer (15) of patterns (150) and of said reflective layer (16), times the cosine of a refracted angle (r) corresponding to an angle of incidence ($\theta$) of the radar waves (R1), where m is an integer.

11. Vehicle assembly (1) according to any one of the preceding claims, wherein the equivalent refractive index ($n_{eq}$) is computed for an angle of incidence ($\theta$) of the radar waves (R1) equal to the center of a field of view (FOV) of said radar sensor (10).

12. Vehicle assembly (1) according to any one of the preceding claims, wherein said light module (13) is a daylight light module, or an indicator light, or a reflector, or a raised stop light.

13. Light module (13) disposed facing a radar sensor (10) configured to emit radar waves (R1) over a range ($\Delta$1) of wavelengths ($\lambda$), said light module (13) being configured to perform a signaling function (f1) and comprising a sub-layer (14) and a layer (15) of patterns (150), said layer (15) of patterns (150) forming a sub-wavelength structured dielectric element with a repetition period (A) of the patterns (150) that is less than a quarter of a wavelength ($\lambda$) of said range ($\Delta$1), and **characterized in that** the total thickness (e0) of said light module (13) is equal to m times said wavelength ($\lambda$), with the whole being divided by twice the equivalent refractive index ($n_{eq}$) of said sub-layer (14) and of said layer (15) of patterns (150), times the cosine of a refracted angle (r) corresponding to an angle of incidence ($\theta$) of the radar waves (R1), where m is an integer.

[Fig. 1]

[Fig. 2]

[Fig. 3]

[Fig. 4]

[Fig. 5]

**EP 4 256 376 B1**

## RÉFÉRENCES CITÉES DANS LA DESCRIPTION

**Documents brevets cités dans la description**

- DE 102011115829 A1